# EUROPEAN PATENT APPLICATION

(11) **EP 0 978 728 A1**
(43) Date of publication of application: **09.02.2000**
(21) Application number: 99202583.3
(22) Date of filing: 06.08.1999
(51) Int. Cl.: G01S 5/14

(54) **Locating system**

(30) Priority: 07.08.1998 US 130068
(71) Applicant: Texas Instruments Incorporated, Dallas, Texas 75251 (US)
(72) Inventor: Ruiz, Everardo D., Richardson, Texas 75081 (US)
(74) Representative: Holt, Michael

(57) **Abstract**

A locator system which includes a GPS receiver (23) (31) for receiving GPS signals, a mobile subscriber unit (25) for receiving the GPS error indicating signals; and circuitry, preferably a DSP (37), responsive to the GPS error indicating signals and the GPS signals to provide a corrected location indication. There is also provided a source of GPS error indicating signals remote from the mobile subscriber unit. The mobile subscriber unit includes a CDMA receiver (33). The GPS receiver (31), mobile subscriber unit (25) and DSP (37) are contained as a single unit.

## Description

### FIELD OF THE INVENTION

This invention relates to an improved low cost GPS-based location system having greater accuracy than is provided by standard low cost GPS based systems and its integration into mobile subscriber units operating in a code division multiple access (CDMA) network.

### BRIEF DESCRIPTION OF THE PRIOR ART

The global positioning system (GPS) is a series of satellites accurately located in space, each of which provides a unique signal whereby the location on or near earth of a receiver of a multiplicity of these signals can be accurately determined in well known manner by mathematical calculation using the received signals. It is known that the signals received from the satellites can be distorted due to changes in atmospheric conditions and the like such that they provide a false reading of their location such as, for example, by taking a longer or shorter time to arrive at the receiver. This can result in an error in calculated position. It is also known that the data from the GPS satellite (space segment) is dithered such that it provides imperfect information with only those with a need to know being provided with the dithering function (P-code) for the purpose of position correction. This however provides an additional impediment to those without such dithering function who are therefore unable to cope with the offset present by the dithering or must deal with somewhat inaccurate information. A method of overcoming this problem is to determine location from the GPS system as well as knowing the true location of a separate, relatively close receiver and thereby calculating the instantaneous error. The calculated error can then be used as an offset to provide error correction of GPS position and is known as differential GPS (DGPS). While this data is available via the Coast Guard and other agencies via Wide Area Augmented GPS service in select geographic regions, many urban areas serviced by CDMA networks do not have access to this data. GPS receivers are now very compact and can be placed inexpensively in mobile subscriber units, but still have poor accuracy.

Telephonic data is generally transmitted using well known analog technology as well as several more recent forms of digital technology. The form of digital technology known as code division multiple access (CDMA) is a digital system wherein the data is scrambled in accordance with a code known only by a particular receiver or receivers. Accordingly, when that receiver senses data scrambled according to the particular code, it reacts thereto and can decode the data being transmitted. CDMA requires a very large bandwidth for its transmission. Because of this large bandwidth requirement, when operating in a multi-path environment wherein multiple signals of the same frequency are received which might cancel, only a small portion of the energy in the transmitted band will be canceled, thereby allowing the data to be received even in the presence of strong multipath fading. On the other hand, where the data is being transmitted over a very narrow bandwidth, such multiple path signals can completely cancel the received signal or make the signal unintelligible to the receiving equipment. In this case, conventional narrowband DGPS would be unreliable or completely unavailable.

It is known that, since non-military GPS receivers have no knowledge of the GPS military precision code (p-code), commercial GPS suffers significantly reduced accuracy in position calculation. While differential techniques (DGPS) may be used to correct for the error, urban environments present the additional challenge of strong multipath fading effects. This upsets DGPS reception and leads to intermittent DGPS availability. It is therefore apparent that improved technology is required which is economically viable for commercial use.

### SUMMARY OF THE INVENTION

In accordance with the present teachings, the above described problems inherent in the prior art are minimized and there is disclosed a mobile subscriber unit with integrated locator which is highly accurate and low cost.

Briefly, since the position of commercial CDMA network base stations are precisely known and GPS is already used for precise synchronization of the network, differential GPS can be achieved through computation of error offsets at the serving base station and transmission of the error offset to mobile units as overhead data by way of a large bandwidth CDMA channel. By transmitting the error offset as overhead data, a layer of selective availability is added to the GPS error correction data, making CDMA network based DGPS a service which can be made available only to DGPS subscribers. In addition, the reliability of DGPS in urban areas is improved since multipath effects are minimized by transmission of the information in the more robust CDMA channel. This selective, more robust, more accurate GPS can be offered with little or no changes to existing CDMA network base stations. The only technology required are a commercially available DSP chip with an inexpensive civilian (commercial) GPS receiver in a CDMA mobile telephone (subscriber unit).

A typical system in accordance with the present teachings includes a combination mobile subscriber unit and GPS locator which includes a mobile subscriber unit, a GPS receiver and a digital signal processor containing the required software. The GPS receiver can be of standard commercial type and constantly receives GPS signal from the plurality of GPS satellites in space as is well known and calculates location in standard manner. As explained above, the GPS signals received contain an inaccuracy and therefore provide somewhat erroneous information. This erroneous information is corrected by the remainder of the combination mobile subscriber unit and GPS locator. The Coast Guard and agencies which are capable of receiving the GPS signals and determining the error at any time provide this information to at least a segment of the public. In accordance with the present teachings, this error information is periodically transmitted to the subscriber unit and is combined with the information received by the GPS receiver in the mobile subscriber unit. A digital signal processor (DSP) or other appropriate calculating system processes the information received from the GPS receiver utilizing the error information received by the subscriber unit to provide a highly accurate indication of location. This is accomplished with a mobile device which approaches the size of a standard cellular telephone.

### BRIEF DESCRIPTION OF THE DRAWINGS

The present invention will now be further described, by way of example, with reference to certain exemplary embodiments illustrated in the accompanying drawings in which:
FIGURE 1 is a schematic diagram of a locating system which can be used in accordance with the present teachings;
FIGURE 2 is a schematic diagram of a locator in accordance with the present teachings; and
FIGURE 3 is a flow chart showing GPS satellite operation of a digital signal processor.

### DESCRIPTION OF THE PREFERRED EMBODIMENT

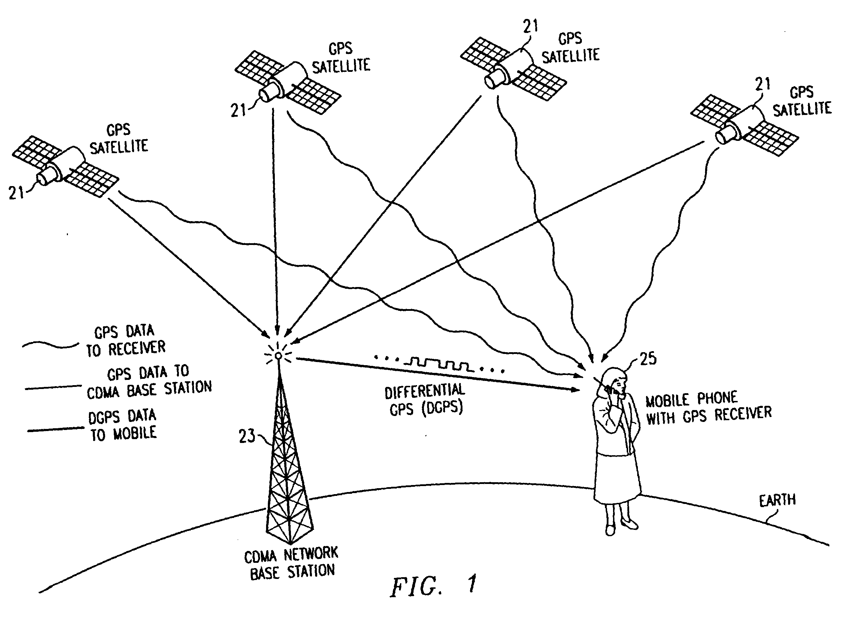

Referring first to FIGURE 1, there is shown a location stet system which includes GPS satellites 21 spaced apart in space in standard manner, as is well known. These satellites 21 transmit GPS data to the CDMA network base stations 23 which each have a GPS receiver and a known position as shown by a straight line. The satellites 21 also transmit GPS data to the GPS receivers at the mobile subscriber units 25 as shown by the wavy line to establish the approximate position of the mobile subscriber units. Differential GPS (DGPS) data is sent from the base station 23 to the mobile subscriber unit 25 in CDMA code, this function being capable of operation only to selected units, such as a paging channel. If the mobile subscriber unit 25 receives the DGPS data, this DGPS data is used at the mobile subscriber unit to correct the GPS data received by the mobile subscriber unit. Accuracy is thereby improved by almost two orders of magnitude from about 100 meters to about 2 meters.

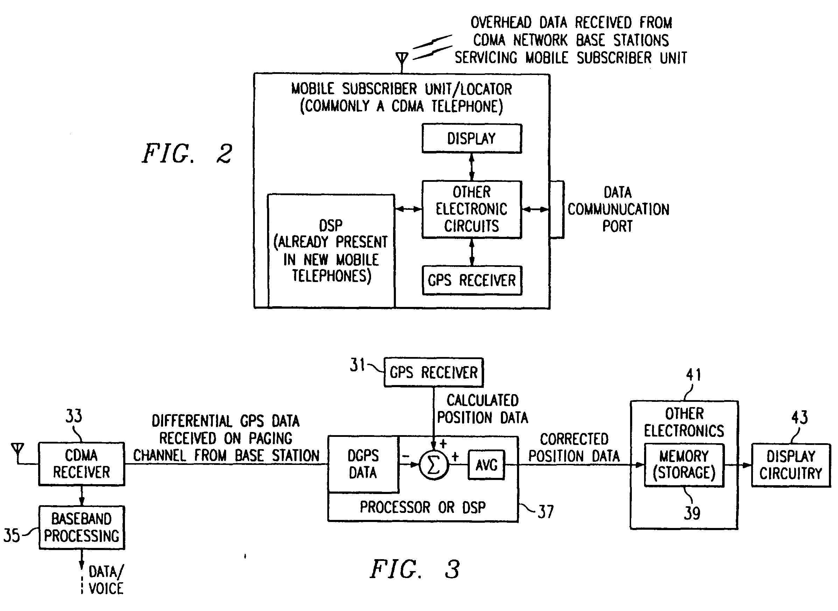

Referring to FIGURE 2, there is shown a combination mobile subscriber unit and GPS locator which includes a mobile subscriber/locator unit 3, a GPS receiver 5 and a digital signal processor containing software 7. The GPS receiver 5 portion of the locator is of standard commercial type and constantly receives GPS signal from a plurality of satellites 9 as is well known and calculates location in standard manner. As explained above and shown in FIGURE 1, the GPS signals received contain an inaccuracy and therefore provide somewhat erroneous information. This erroneous information is corrected by the remainder of the combination mobile subscriber unit and GPS locator. As stated above, agencies which are capable of receiving the GPS signals and determining the error at any time sometimes provide this information to at least a segment of the public. This error information is periodically transmitted to the subscriber unit 3 by a transmitter (not shown) which is a CDMA transmitter. The error information is combined with the information received by the GPS receiver 5 in the DSP 7 wherein the information received from the GPS receiver is modified by the error information received by the subscriber unit to provide an accurate indication of location. This is accomplished with a mobile device which approaches the size of a standard cellular telephone.

Referring to FIGURE 3, there is shown a flow chart which describes the operation of the DSP 7 of FIGURE 2. The circuit includes the GPS receiver 31 for receiving the GPS data and a CDMA receiver 33 for receiving CDMA coded data and transmitting standard analog and/or digital data via baseband processing 35 as required. Overhead data received by the CDMA receiver 33 on the paging channel, if DGPS offset data, is subtracted at the DSP 37 from the current calculated position provided by the GPS receiver to compute the corrected position of the mobile subscriber unit. This data can be stored in memory 39 in the electronics 41 and/or displayed by display 43. Typical position accuracy is improved from about 100 meters to about 3 meters.

The manner in which the DSP 7 calculates the position of the mobile subscriber unit 25 (1) is as follows:
- Differential GPS (DGPS) error/offset data is received at the mobile subscriber unit 25 from the base station, this being the magnitude of error in three dimensions (x, y and z error).
- The GPS receiver 5 in the mobile subscriber unit 25 calculates position in three dimensions (x, y, z mobile).
- The DSP 7 subtracts error vector (x, y, z error) from the GPS position vector (x, y, z mobile), thus providing the corrected position (x mobile - x error, y mobile - y error and z mobile - z error).
- To improve accuracy further, an averaging function is performed in the DSP 7 over a running stream data representing the corrected position of the mobile subscriber unit 25, this being the sum from i= 1 to i=N of (x mobile - x error, y mobile - y error and z mobile - z error) divided by N where N is the number of samples used for averaging.

Although aspects of the present teachings have each been described with reference to a specific preferred embodiment thereof, many variations and modifications will immediately become apparent to those skilled in the art.

## Claims

1. A locator system comprising:
a GPS receiver for receiving GPS signals;
a mobile subscriber unit for receiving GPS error indicating signals; and
circuitry responsive to said GPS error indicating signals and said GPS signals for providing a corrected location indication.

2. The locator system of claim 1 further comprising:
a source of GPS error indicating signals remote from said mobile subscriber unit.

3. The locator system of claim 1 or claim 2, wherein said mobile subscriber unit includes a CDMA receiver.

4. The locator system of claim 2 or claim 3, said source of GPS error indicating signals is a CDMA transmitter.

5. The locator system of any preceding claim, wherein said GPS receiver, said mobile subscriber unit and said circuitry for providing a corrected location indication are contained as a single unit.

6. The locator system of any preceding claim, 1 wherein said means for providing a corrected location indication comprises a digital signal processor.
